# EUROPÄISCHE PATENTANMELDUNG

(11) **EP 4 029 966 A1**
(43) Veröffentlichungstag der Anmeldung: **20.07.2022**
(21) Anmeldenummer: 21151861.8
(22) Anmeldetag: 15.01.2021
(51) Int. Cl.: C23C 4/073, B23K 26/34, C23C 4/08, C23C 4/134, C23C 4/18, C23C 24/10, C23C 28/02, C23C 30/00, F16D 65/12

(54) **VERFAHREN ZUR HERSTELLUNG EINER BESCHICHTETEN GRAUGUSS-BREMSSCHEIBE**

(71) Anmelder: Ford Global Technologies, LLC, Dearborn, MI 48126 (US)
(72) Erfinder: Käsgen, Klaus, 42799 Leichlingen (DE); Rettig, Marc, 50823 Köln (DE); Verpoort, Clemens Maria, 40789 Monheim (DE)
(74) Vertreter: Markowitz, Markus

(57) **Zusammenfassung**

Eine Bremsscheibe, deren Grundkörper aus Grauguss (GG) hergestellt worden ist, wird auf ihren kreisringförmigen Bremsflächen mit einer metallischen Beschichtung im Wege einer Laserauftragsschweißung überzogen. In der Beschichtung, die aus einem Schweißgut mit einem austenitischen Gefüge oder zumindest Gefügeanteilen besteht, wird mittels einer deren äußere Randschicht erfassenden plastischen Verformung mittels eines Rollierwerkzeugs ein Druckeigenspannungszustand eingestellt. Durch die Aufbringung einer solchen Beschichtung werden ein verbesserter Korrosionsschutz, eine erhöhte Festigkeit, insbesondere Ermüdungs- und Dauerfestigkeit, und damit eine erhöhte Lebensdauer der Bremsscheibe erreicht. Als weiterer Vorteil, der sich aus der infolge der plastischen Verformung einstellenden Oberflächengüte und -glätte einstellt, besteht in einer Minderung an zerspanender Nachbearbeitung durch Schleifen, Honen usw..

## Beschreibung

Die Erfindung bezieht sich auf ein Verfahren zur Herstellung einer Bremsscheibe mit einem aus GG (Grauguss) bestehenden scheibenartigen Grundkörper mit den Merkmalen des Oberbegriffs des Anspruchs 1.

In der CN 107 326 221 A ist eine Legierung auf Kobaltbasis und eine aus der Legierung auf Kobaltbasis hergestellte Plattierungsschicht bekannt. Die Kobaltbasislegierung umfasst Co, Ni, Cr, Fe, Si, W, C und Al. Die Legierung auf Kobaltbasis wird insbesondere hergestellt aus, bezogen auf das Gewicht, 19-22,5 % Ni, 18-19,5 % Cr, 7,5-10,5 % Al, 0,8-1,1 % Fe, 0,7-1,0 % Si, 3,0-4,4 % W, 0,6-0,9 % C, und dem Rest Co und weniger als 0. 1 % unvermeidbare Verunreinigungen. Der Massenanteil von Ni und Co ist größer als 0,4, aber kleiner als 0,56, und der Massenanteil von Ni und Al ist größer als 2, aber kleiner als 2,7. Die Legierung auf Kobaltbasis kann zur Herstellung der Plattierungsschicht mit hoher Abriebfestigkeit und Wärmeermüdungsbeständigkeit verwendet werden. Die Plattierungsschicht kann nicht nur zum Reparieren und Verbessern einer Reibungsschicht einer Bremsscheibe verwendet werden, sondern kann auch als Reibungsschicht der Bremsscheibe und als Schutzschicht auf der Oberfläche anderer Metallmaterialien verwendet werden, die wiederholte Wärmeeinwirkung ertragen müssen und Reibungsabrieb in Umgebungen wie Formhohlraumauskleidungen, Motorkolben und inneren Zylindern, Innenwänden von Erdölpipelineventilen haben.

Aus der US 2020 0 191 215 A1 sind eine in einem Bremsbereich mit einer nitridhaltigen Verschleiß- und Korrosionsschutzschicht belegte und im Übrigen aus GG (Grauguss) bestehende Bremsscheibe sowie ein Verfahren zu ihrer Herstellung bekannt. Die Beschichtung wird in einem thermischen Spritzverfahren aufgetragen, wobei ein Eisenpulver in einer reduzierenden Atmosphäre aufgetragen wird und wobei diese Schicht nitriert und poliert wird. Das Beschichtungsmaterial kann zur Erhöhung der Festigkeit Cr, Al, Ti und V als Nitridbildner enthalten. Durch Druckanwendung während des Polierens sollen Poren zwischen den Partikeln des Eisenpulvers vermindert und die Dichte der Beschichtung erhöht werden. Auf diese Weise sollen der Verschleiß-, der Ermüdungs- sowie der Korrosionswiderstand verbessert werden. Beim Abkühlen der aufgetragenen Schutzschicht können in dieser jedoch Zugeigenspannungen entstehen, welche ein Auftreten von Oberflächenrissen verursachen und das Ermüdungsverhalten verschlechtern. Die genannten Eigenspannungen können auch in die GG-Struktur der Bremsscheibe eindringen und deren Festigkeitseigenschaften nachteilig beeinflussen.

Aus der US 2010 0 173 172 A1 ist ein Verfahren zur Herstellung einer verschleißmindernden, Ni und/oder Co enthaltenden Beschichtung auf einem metallischen Substrat bekannt, wobei eine metallische, die Beschichtung bildende Legierung auf das Substrat gebracht und nach Aufrauhung gehärtet wird. Die Härtung wird mittels plastischer Verformung durch Rollieren durchgeführt, wobei das Auftragen der Legierung in Pulverform im Rahmen beispielsweise eines Laserauftragsschweißverfahrens durchgeführt wird. Infolge der auf plastischer Verformung beruhenden Härtung ist die Beschichtung durch Druckeigenspannungen gekennzeichnet, durch welche die Widerstandsfähigkeit gegenüber Zugbeanspruchungen, die Ermüdungsfestigkeit und der Korrosionswiderstand der Beschichtung verbessert werden. Der Offenbarungsgehalt dieser Druckschrift ist im Übrigen auf allgemeine, kein spezifisches Substrat betreffende Informationen beschränkt.

Aus der DE 10 2011 089 848 A1 ist ein weiteres Verfahren zur Herstellung einer GG-Bremsscheibe bekannt, deren kreisringförmige Reibfläche mit einer verschleißmindernden Beschichtung überzogen ist. Vor dem Auftragen der Beschichtung findet eine Behandlung der Bremsscheibe zwecks Einstellung einer Druckeigenspannung in der Oberfläche bzw. Reibfläche statt, bevor nach einem Glätten die Beschichtung aufgetragen wird. Die Beschichtung wird in einem thermischen Spritzverfahren aufgebracht und enthält Karbide, z. B. Chrom- und/oder Wolframkarbide, die in eine metallische Matrix auf Nickel- oder Kobaltbasis eingebunden sind. Druckeigenspannungen im Oberflächenbereich des Bremsscheibengrundkörpers werden mittels einer plastischen Verformung mittels eines Rollierwerkzeugs erreicht, wobei durch die sich anschließende Glättung Kerben geschlossen und einer Rissbildung entgegengewirkt wird. Auch korrosionsbedingte Risse sollen auf diese Weise vermieden werden. Ein Entstehen von Zugeigenspannungen und Rissen in der anschließend aufgetragenen Beschichtung nach deren Abkühlung kann jedoch nicht ausgeschlossen werden.

Von den insgesamt zur Verfügung stehenden thermischen Verfahren zum Auftragen einer Schutzbeschichtung bei Bremsscheiben hat sich das Laserauftragsschweißen (Laser Cladding) als besonders vorteilhaft erwiesen, und zwar insbesondere mit Hinblick auf die erzielbare Korrosionsbeständigkeit. Allerdings ergibt sich hierbei nach erfolgter Abkühlung das Problem der Ausbildung von Zugeigenspannungen, hiermit einhergehender Rissbildungen und eines die Festigkeitseigenschaften der Bremsscheibe sowie das Ermüdungsverhalten insgesamt verschlechternden Einflusses.

Es ist vor diesem Hintergrund die Aufgabe der Erfindung, ein Verfahren eingangs genannter Art mit Hinblick auf die Ausbildung einer Beschichtung dahingehend zu verbessern, dass im Oberflächenbereich derselben keine Zugeigenspannungen entstehen und das Ermüdungsverhalten, die Verschleißfestigkeit sowie der Korrosionsschutz verbessert werden.

Die Lösung der Aufgabe gelingt mit einem Verfahren mit den Merkmalen des Anspruchs 1.

Mit der Erfindung wird ein Verfahren zur Herstellung einer Bremsscheibe mit einem aus GG (Grauguss) bestehenden scheibenartigen Grundkörper aufgezeigt, dessen wenigstens eine kreisringförmige Reib- bzw. Bremsfläche mit einer dem Verschleiß- und/oder Korrosionsschutz dienenden Beschichtung belegt ist, wobei die Beschichtung im Wege eines Laserauftragsschweißens aufgetragen wird. Erfindungsgemäß wird im Rahmen der Beschichtung ein Schweißgut mit austenitischem Gefüge oder Gefügebestandteilen verwendet, wobei in zumindest einer, einer freien Oberfläche der Beschichtung zugekehrten Randschicht durch plastische Verformung Druckeigenspannungen eingestellt werden.

Zielführend ist vorgesehen, dass eine von außen aufgebrachte Verdichtung einer Randschicht der Beschichtung durch plastische Verformung bewirkt wird, welche an dieser Stelle zur Ausbildung von Druckeigenspannungen führt. Diese verbessern die Aufnahmefähigkeit einer Beanspruchung in der Form von Zugspannungen und wirken der Entstehung von Rissen entgegen. Auch wird eine auf Werkstoffermüdung beruhende Ausbreitung von eventuell bereits vorhandenen Rissen wirksam verhindert und insbesondere deren Ausbreitung in die Struktur des Graugussgrundkörpers der Bremsscheibe. In dem von der Verformung beeinflussten Bereich können ferner eventuell vorhandene Poren wieder verschlossen werden. Eine Verminderung von Rissen und Poren und eine hiermit einhergehende Oberflächenglättung trägt ferner zu einem verbesserten Schutz vor einem Eindringen von korrosiv wirkendem Regenwasser oder dergleichen in die Graugusssubstanz der Bremsscheibe bei. Dadurch, dass das Schweißgut der durch ein Laserauftragsschweißen aufgetragenen Beschichtung ein austenitisches Gefüge bzw. austenitische Gefügebestandteile aufweist, ist dessen Verformung mit einer starken Kaltverfestigung verbunden, welche zu einer beträchtlichen Erhöhung der Streckgrenze führt. Das Einstellen von Druckeigenspannungen durch plastische Verformung in Verbindung mit der Verwendung eines austenitischen Gefüges bringt somit neben einer Verbesserung von Festigkeitseigenschaften, der Lebensdauer auch bereits einen verbesserten Korrosionsschutz mit sich.

Es liegt im Sinne der Erfindung, dass die Bremsscheibe beidseitig die besagte Reib- bzw. Bremsfläche aufweist, deren Beschichtung mit dem erfindungsgemäßen Verfahren aufgebracht wurde. Die Bremsscheibe kann natürlich auch als innenbelüftete Bremsscheibe ausgeführt sein. Insofern umfasst der Gegenstand der Erfindung jegliche Bremsscheiben, bevorzugt an Kraftfahrzeugen, ohne dass dies beschränkend wirken soll.

In idealer Ausgestaltung des Erfindungsgedankens kann vorgesehen sein, die Beschichtung einschichtig oder mehrschichtig auszuführen. Bei der einschichtigen Beschichtung wird die Beschichtung direkt auf die Graugusssubstanz aufgetragen. Dies ist möglich, wenn die Beschichtung kompatibel zur Graugusssubstanz ist. Ist die Beschichtung mehrschichtig ausgeführt, kann auf der Graugusssubstanz zunächst eine Haftvermittlerschicht, also ein Haftgrund aufgebracht werden, auf welchem dann eine Deckschicht aufgebracht wird. Bei der Haftvermittlerschicht kann es sich um einen Edelstahl mit der Werkstoffnummer 1.4401, 1.4462 oder 1.4465 handeln, was natürlich nicht beschränkend sein soll. Auf der Haftvermittlerschicht wird dann die Deckschicht mit austenitischem Gefüge oder Gefügebestandteilen aufgetragen.

Die vorstehend erwähnten Vorteile ergeben sich bereits bei Benutzung eines Schweißgutes ohne eingebundene Karbide sowohl bei der einschichtigen Beschichtung als auch bei der mehrschichtigen, bevorzugt zweischichtigen Beschichtung. In einer bevorzugten Ausgestaltung des Verfahrens hingegen kann vorgesehen sein, dass im Rahmen der Beschichtung ein Schweißgut mit Karbiden oder Karbidmischungen, sowohl bei der einschichtigen Beschichtung als auch bei der mehrschichtigen Beschichtung verwendet wird. Insbesondere bei der mehrschichtigen Beschichtung ist in idealer Ausführung vorgesehen, dass nur die Deckschicht mit austenitischem Gefüge oder Gefügebestandteilen mit Karbiden oder Karbidmischungen aufgetragen wird, wobei die Haftvermittlerschicht aus den genannten Edelstählen gebildet sein kann. Die Deckschicht ist bevorzugt ebenfalls aus austenitischen Stählen wie beispielsweise 1.4401, 1.4462 oder 1.4462 gebildet, jedoch mit harten Karbid-Partikel als Verstärkung gegen Verschleiß. Es kann somit im Rahmen der Beschichtung also ein Schweißgut mit zu einer Festigkeitssteigerung beitragenden Karbiden oder Karbidmischungen zum Einsatz kommen. Auf diesem Wege ist ferner eine Erhöhung der Härte und des Korrosionswiderstands auch eine weitere Verschleißminderung darstellbar.

Es können sehr feine Karbide in der Größe von 1-5 µm verwendetet werden, aber auch 40-70 µm große Karbide (z.B. Cr, Ti, V, und Niob-Karbid).

Bevorzugt kann vorgesehen sein, dass die Randschicht der Beschichtung vollständig plastisch verformt wird, was bei der einschichtigen Beschichtung, aber auch bei der mehrschichtigen Beschichtung vorgesehen sein kann. Ist die Beschichtung mehrschichtig ausgeführt, kann zweckmäßiger Weise vorgesehen sein, dass lediglich die Deckschicht mit austenitischem Gefüge oder Gefügebestandteilen mit Karbiden oder Karbidmischungen plastisch verformt wird. Somit kann vorgesehen sein, dass die plastische Verformung der Beschichtung auf eine äußere einer freien Oberfläche zugekehrten Randschicht, also nur auf die Deckschicht, einen Teil davon, oder nur einen Teil der einschichtigen Beschichtung zu beschränken. Dies, also die plastische Verformung nur der Deckschicht bei der mehrschichtigen Beschichtung oder die plastische Verformung nur eines Teils der einschichtigen Beschichtung hat sich als praktisch zweckmäßig und hinreichend herausgestellt.

Die Schichtdicke der Beschichtung kann einen Betrag von 250 - 750µm aufweisen. Es sind aber auch dünnere Schichten von 150 - 400µm denkbar. Dabei ist die Deckschicht bei der mehrschichtigen Beschichtung bevorzugt dicker als die Haftvermittlerschicht. In günstiger Ausgestaltung des Erfindungsgedankens kann die Haftvermittlerschicht, also der Haftgrund in einer Dicke von 50-250 µm, bevorzugt in einer Dicke von 120-150 µm aufgetragen werden. Die Deckschicht kann mit einer Dicke von 200-500 µm, bevorzugt eine Dicke von 100-250 µm aufgetragen werden.

In weiter bevorzugter Ausgestaltung des Verfahrens kann vorgesehen sein, dass die plastische Verformung der Randschicht durch ein Oberflächen-Rollierverfahren durchgeführt wird. Diese zweckmäßige Weiterbildung des Verfahrens ist mit einem örtlichen Überschreiten der Werkstoffstreckgrenze verbunden und bewirkt ein plastisches Fließen einer oberflächennahen Werkstoffschicht. Neben einer Glättung der behandelten Oberfläche ergibt sich eine erhöhte Verschleißfestigkeit sowie eine Zunahme der Härte der so behandelten Randschicht infolge einer Kaltverfestigung. Auch können eventuell vorhandene Schweißporen eliminiert, und die Bindung zwischen aus dem Schweißgut gebildeten oder separat zugeführten Karbiden und der austenitischen Matrix verbessert werden. Hieraus folgt auch eine Reduzierung der Fertigungskosten gegenüber bisher bekannten Verfahren dadurch, dass ein Nachbearbeitungsaufwand durch Schleifen, Polieren oder Honen vermindert werden kann. In idealer Ausgestaltung des Verfahrens kann das Rollieren sowohl beim Honen, bevorzugt beim Flachhonen als auch beim Schleifen, bevorzugt mittels Schleifscheiben der Beschichtung integriert werden.

In noch weiter bevorzugter Ausgestaltung des Verfahrens kann vorgesehen sein, dass bei der plastischen Verformung Rollierwerkzeuge eingesetzt, deren wirksame Breite der Breite der Bremsfläche der Bremsscheibe zumindest im Wesentlichen entspricht, bevorzugt mindestens so breit ist wie die Breite der Bremsfläche, weiter bevorzugt etwas größer ist als diese, so dass die gesamte Beschichtung rolliert, also glattgewalzt werden kann. Dies ermöglicht ein rationelles Arbeiten, da die gesamte Breite des die Beschichtung bildenden Schweißgutbelages gleichzeitig und damit einheitlich behandelt werden kann. Rollierwerkzeuge sind in unterschiedlichen Formen an sich bekannt und häufig in einer Mehrfachanordnung auf Werkzeugköpfen gelagert. Lediglich beispielhaft seien in diesem Zusammenhang Rollier-Kegel genannt.

Insgesamt steht mit dem erfindungsgemäßen Verfahren ein Verfahren zur Verfügung, welches die Herstellung einer Bremsscheibe mit verbesserten Verschleiß- und Festigkeitseigenschaften, insbesondere deren Lebensdauer betreffend ermöglicht, deren Bremsfläche einen im Vergleich zum Stand der Technik geringeren Nachbearbeitungsaufwand erfordert und welche darüber hinaus eine erhöhte Korrosionswiderstandsfähigkeit aufweist.

Es ist darauf hinzuweisen, dass die in den Ansprüchen aufgelisteten Merkmale in beliebiger, technisch sinnvoller Weise miteinander kombiniert werden können und weitere Ausgestaltungen der Erfindung aufzeigen.

## Patentansprüche

1. Verfahren zur Herstellung einer Bremsscheibe mit einem aus GG (Grauguss) bestehenden scheibenartigen Grundkörper, dessen wenigstens eine kreisringförmige Reib- bzw. Bremsfläche mit einer dem Verschleiß- und/oder Korrosionsschutz dienenden Beschichtung belegt ist, wobei die Beschichtung im Wege eines Laserauftragsschweißens aufgetragen wird,
**dadurch gekennzeichnet, dass**
im Rahmen der Beschichtung ein Schweißgut mit austenitischem Gefüge oder Gefügebestandteilen verwendet wird, und dass in zumindest einer, einer freien Oberfläche der Beschichtung zugekehrten Randschicht durch plastische Verformung Druckeigenspannungen eingestellt werden.

2. Verfahren nach Anspruch 1,
**dadurch gekennzeichnet, dass**
im Rahmen der Beschichtung ein Schweißgut mit Karbiden oder Karbidmischungen verwendet wird.

3. Verfahren nach Anspruch 1 oder 2,
**dadurch gekennzeichnet, dass**
die Beschichtung vollständig oder teilweise plastisch verformt wird.

4. Verfahren nach einem der vorhergehenden Ansprüche,
**dadurch gekennzeichnet, dass**
die Beschichtung einschichtig oder mehrschichtig aufgetragen wird.

5. Verfahren nach Anspruch 4,
**dadurch gekennzeichnet, dass**
die mehrschichtige Beschichtung mit einer Haftvermittlerschicht und mit einer Deckschicht aufgetragen wird.

6. Verfahren nach Anspruch 5,
**dadurch gekennzeichnet, dass**
lediglich die Deckschicht plastisch verformt wird.

7. Verfahren nach einem der vorhergehenden Ansprüche,
**dadurch gekennzeichnet, dass**
dass die plastische Verformung durch ein Oberflächen-Rollierverfahren durchgeführt wird.

8. Verfahren nach Anspruch 7,
**dadurch gekennzeichnet, dass**
zur Durchführung des Rollierverfahrens Rollierwerkzeuge benutzt werden, deren für die plastische Verformung wirksame Breite der Breite der Bremsfläche zumindest im Wesentlichen entspricht.

## Geänderte Patentansprüche

### Geänderte Patentansprüche gemäss Regel 137(2) EPÜ.

1. Verfahren zur Herstellung einer Bremsscheibe mit einem aus GG (Grauguss) bestehenden scheibenartigen Grundkörper, dessen wenigstens eine kreisringförmige Reib- bzw. Bremsfläche mit einer dem Verschleiß- und/oder Korrosionsschutz dienenden Beschichtung belegt ist, wobei die Beschichtung im Wege eines Laserauftragsschweißens aufgetragen wird, wobei im Rahmen der Beschichtung ein Schweißgut mit austenitischem Gefüge oder Gefügebestandteilen verwendet wird, und wobei die Beschichtung mehrschichtig aufgetragen wird, wobei auf der Graugusssubstanz zunächst eine Haftvermittlerschicht, also ein Haftgrund aufgebracht wird, auf welchem dann eine Deckschicht aufgebracht wird, **dadurch gekennzeichnet, dass**
die Schichtdicke der Beschichtung einen Betrag von 250 - 750µm aufweist, wobei die Deckschicht bei der mehrschichtigen Beschichtung dicker ist als die Haftvermittlerschicht, und wobei die Haftvermittlerschicht, also der Haftgrund, in einer Dicke von 50-250 µm, und die Deckschicht mit einer Dicke von 200-500 µm aufgetragen werden, wobei in zumindest einer, einer freien Oberfläche der Beschichtung zugekehrten Randschicht durch plastische Verformung durch ein Oberflächen-Rollierverfahren Druckeigenspannungen eingestellt werden, indem zur Durchführung des Rollierverfahrens Rollierwerkzeuge benutzt werden, deren für die plastische Verformung wirksame Breite der Breite der Bremsfläche zumindest im Wesentlichen entspricht.

2. Verfahren nach Anspruch 1,
**dadurch gekennzeichnet, dass**
die Schichtdicke der Beschichtung einen Betrag von 150 - 400µm aufweist, wobei der Haftgrund in einer Dicke von 50-150 µm und die Deckschicht kann mit einer Dicke von 100-250 µm aufgetragen werden.

3. Verfahren nach Anspruch 1 oder 2,
**dadurch gekennzeichnet, dass**
im Rahmen der Beschichtung ein Schweißgut mit Karbiden oder Karbidmischungen verwendet wird

4. Verfahren nach einem der vorhergehenden Ansprüche,
**dadurch gekennzeichnet, dass**
lediglich die Deckschicht plastisch verformt wird.
